(19) **Europäisches Patentamt European Patent Office Office européen des brevets**

(11) **EP 4 215 894 B1**

(12) **EUROPEAN PATENT SPECIFICATION**

(45) Date of publication and mention
of the grant of the patent:
**30.07.2025 Bulletin 2025/31**

(21) Application number: **20954036.8**

(22) Date of filing: **15.09.2020**

(51) International Patent Classification (IPC):
$G01M\ 11/00^{(2006.01)}$    $G01B\ 9/02055^{(2022.01)}$
$G01B\ 9/02^{(2022.01)}$    $G01B\ 9/0209^{(2022.01)}$
$G01B\ 9/02004^{(2022.01)}$    $G01S\ 7/481^{(2006.01)}$
$G01S\ 7/497^{(2006.01)}$    $G01S\ 17/08^{(2006.01)}$

(52) Cooperative Patent Classification (CPC):
G01M 11/3127; G01B 9/02004; G01B 9/02069;
G01B 9/02081; G01B 9/02084; G01B 9/0209;
G01M 11/3145; G01S 7/4816; G01S 7/497;
G01S 17/08; G01B 2290/60

(86) International application number:
**PCT/JP2020/034817**

(87) International publication number:
**WO 2022/059050 (24.03.2022 Gazette 2022/12)**

(54) **OPTICAL FREQUENCY-DOMAIN REFLECTOMETRY DEVICE AND METHOD**

VORRICHTUNG UND VERFAHREN FÜR OPTISCHE FREQUENZBEREICHSREFLEKTOMETRIE

DISPOSITIF ET PROCÉDÉ DE RÉFLECTOMÉTRIE OPTIQUE DE DOMAINE FRÉQUENTIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **Nippon Telegraph And Telephone
Corporation
Chiyoda-ku
Tokyo 100-8116 (JP)**

(72) Inventors:
• **OKAMOTO, Tatsuya**
  **Musashino-shi, Tokyo 180-8585 (JP)**
• **IIDA, Daisuke**
  **Musashino-shi, Tokyo 180-8585 (JP)**
• **OSHIDA, Hiroyuki**
  **Musashino-shi, Tokyo 180-8585 (JP)**

(74) Representative: **v. Bezold & Partner
Patentanwälte - PartG mbB
Ridlerstraße 57
80339 München (DE)**

(56) References cited:
WO-A1-2020/166331    JP-A- 2011 058 938
JP-A- 2016 161 512    US-A1- 2012 067 118
US-A1- 2018 031 471    US-A1- 2022 149 934

• ZHENYANG DING ET AL: "Monitoring optical
fiber sensor networks by optical frequency-
domain reflectometry", PHOTONICS GLOBAL
CONFERENCE (PGC), 2012, IEEE, 13 December
2012 (2012-12-13), pages 1 - 3, XP032328623,
ISBN: 978-1-4673-2513-4, DOI: 10.1109/
PGC.2012.6458067

**Description**

Technical Field

The present disclosure relates to optical frequency domain reflectometry.

Background Art

For general prior art, reference is made to Patent Literature 1, which discloses a device for measuring optical frequency reflection and a measurement method thereof capable of measuring a reflectance distribution having low spatial resolution degradation caused by phase noise without using a broadband reception system, even when performing long-distance measurements. The device for measuring optical frequency reflection is provided with a delay optical fiber for delaying local light by a prescribed time, acquires information on a delay of backscatter light from an optical fiber under measurement relative to the local light and information on the positivity and negativity of a beat frequency by measuring an in-phase component and an orthogonal component of a beat signal obtained by combining the backscatter light from the optical fiber under measurement and the local light delayed by the delay optical fiber, and obtains the reflectance distribution in the longitudinal direction of the optical fiber under measurement on the basis of these pieces of information.

In optical frequency domain reflectometry (OFDR), the optical frequency response of the measurement target is measured with respect to an absolute distance z, and a Fourier transform thereof is calculated, to obtain a backscattered waveform (see Non Patent Literature 1, for example). At this stage, the optical frequency response of the measurement target is sampled at equal optical frequency intervals (FSR of a reference interferometer) in accordance with a clock signal obtained by the reference interferometer.

According to the sampling theorem, the measurable distance in OFDR is determined by the fiber length of the reference interferometer. Furthermore, if the fiber length of the reference interferometer is made longer than the coherence length of the light source, the quality of the clock deteriorates, the beat signal cannot be sampled at equal intervals, and the optical frequency response cannot be measured correctly (the backscattered light waveform cannot be analyzed). Therefore, the existing measurement performance is expressed as a measurement distance of 10 m and a spatial resolution of 100 $\mu$m or lower (see Non Patent Literature 2, for example).

Citation List

Non Patent Literature

Non Patent Literature 1: U. Glombitza and E. Brinkmeyer, "Cohenret frequency-domain reflectometry for characterization of single-mode integrated-optical waveguides", IEEE JLT, vol. 11, no. 8, pp. 1377-1384, Aug. 1993.
Non Patent Literature 2: B. J. Soller et al., "High resolution optical frequency domain reflectometry for characterization of components and assemblies", Opt. Exp., vol. 13, no. 2, pp. 666-674, Jan. 2005.

Patent Literature

Patent Literature 1:WO 20201/66331 A1

Summary of Invention

Technical Problem

The present disclosure aims to enable measurement of a long distance exceeding 1 km with a spatial resolution of 100 $\mu$m or lower, and diagnosis of health of an optical device installed at a long distance.

Solution to Problem

An apparatus according to the present disclosure is an optical frequency domain reflectivity measuring apparatus according to claim 1.

A method according to the present disclosure is a method according to claim 3.

Advantageous Effects of Invention

According to the present disclosure, it is possible to measure a long distance exceeding 1 km with a spatial resolution of 100 $\mu$m or lower, and diagnose health of an optical device installed at a long distance.

Brief Description of Drawings

Fig. 1 illustrates an example configuration of a test system of the present disclosure.
Fig. 2 illustrates an example system configuration not encompassed by the wording of the claims in a case where the beat frequency $f_{beat}$ corresponding to the absolute distance z is observed.
Fig. 3 illustrates an example relationship between beat frequency and distance in the present disclosure.
Fig. 4 illustrates an example relationship between beat frequency and distance measured with the configuration illustrated in Fig. 2.
Fig. 5 illustrates an example of a spectrum to be measured with the configuration illustrated in Fig. 2.
Fig. 6 illustrates an example of a spectrum to be measured with the configuration of the present disclosure.
Fig. 7 illustrates an example of results of Fresnel reflection measurement at a point of 3 km.

Description of Embodiments

The following is a detailed description of embodiments of the present disclosure, with reference to the drawings. Note that the present disclosure is not limited to the embodiments described below. These embodiments are merely examples, and the present disclosure can be carried out in forms with various modifications and improvements based on the knowledge of those skilled in the art. Note that like components are denoted by like reference numerals in this specification and the drawings.

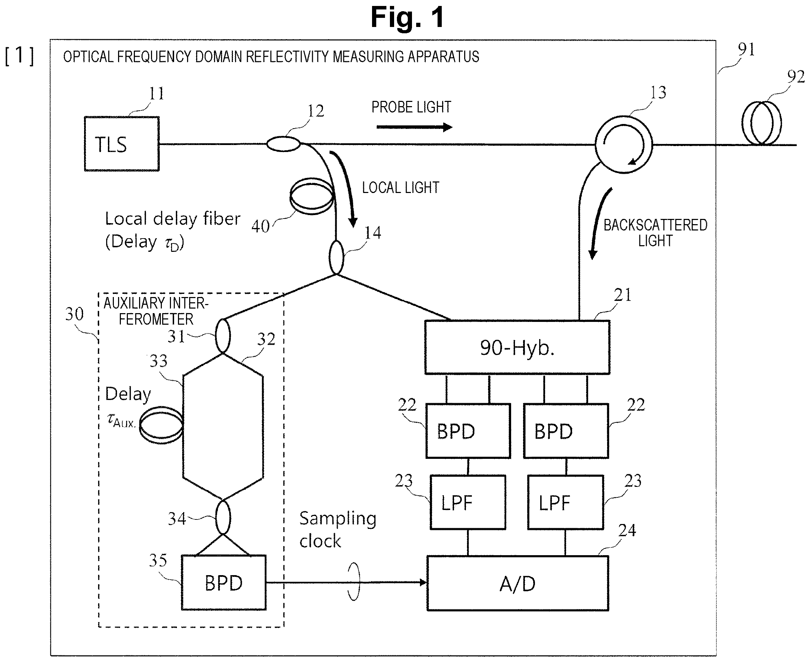

Fig. 1 illustrates an example configuration of a test system of the present disclosure. In the test system of the present disclosure, an optical frequency domain reflectivity measuring apparatus 91 is connected to a measurement target optical fiber 92. The optical frequency domain reflectivity measuring apparatus 91 includes a wavelength swept light source (TLS) 11, a coupler 12, a circulator 13, an optical 90-degree hybrid 21, balance photodetectors (BPDs) 22, low-pass filters (LPFs) 23, an A/D converter circuit 24, an auxiliary interferometer 30, and a local delay fiber 40.

The coupler 12 splits light from the TLS 11 into local light and probe light. A coupler 14 splits the local light from the coupler 12. One local light is input to the auxiliary interferometer 30, and the other local light is input to the 90-degree hybrid 21. The circulator 13 inputs the probe light to the measurement target optical fiber 92, and outputs backscattered light scattered by the measurement target optical fiber 92 to the 90-degree hybrid 21.

The 90-degree hybrid 21 causes the local light and the backscattered light to interfere with each other, and generates the in-phase component and the orthogonal component of the signal (a beat signal) generated by the interference.

The BPDs 22 detect the in-phase component and the orthogonal component of the beat signal, respectively.

The LPFs 23 transmit only the low-frequency components of the output signals from the BPDs 22, which are the beat signals of the local light and the backscattered light.

The A/D 124 converts the analog signals output from the LPFs 23 into digital signals, in accordance with a sampling clock from the auxiliary interferometer 30.

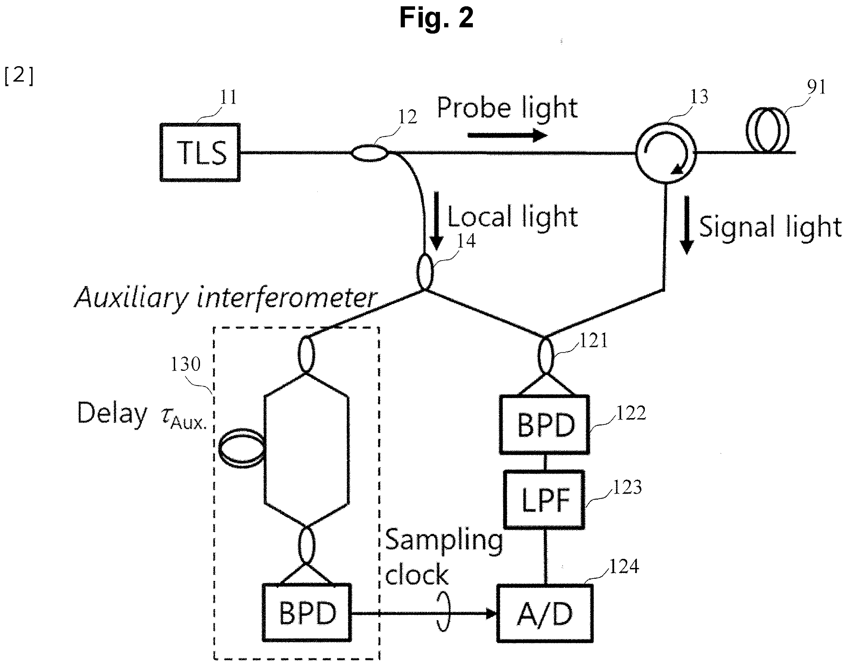

Referring now to Fig. 2, an example system configuration in a case where the beat frequency $f_{beat}$ corresponding to the absolute distance z is observed is described. In the configuration illustrated in Fig. 2, the local delay fiber 40 and the optical 90-degree hybrid 21 are not included, and there is only one balance photodetector 122 and one LPF 123.

In the configuration illustrated in Fig. 2, a coupler 121 is provided in place of the 90-degree hybrid 21. In this case, a beat signal of local light and backscattered light is generated by the coupler 121, and is input to the BPD 122. Further, the A/D 124 converts the analog signal into a digital signal, in accordance with a sampling clock to which a delay $\tau_{AUX}$ is given by the auxiliary interferometer 130. In this case, the optical frequency response $\tilde{r}(\nu)$ to be measured is expressed by the expression shown below (see Expression (5) of Non Patent Literature 1, for example).

[Mathematical Expression 1]

$$\tilde{r}(\nu) = \int r(\tau)\exp[-j2\pi\nu(t)\tau]d\tau$$

$$(1)$$

Here, the parameters are as follows.

r(τ): reflection coefficient
v: optical frequency
τ: the delay due to reciprocating propagation over distance z, and $\tau = 2z/c$
z: the distance to the measurement target in the longitudinal direction
c: the velocity of light propagating in the measurement target

Fourier transform of the optical frequency response r̃(ν) results in a backscattered light waveform r(τ).
[Mathematical formula 2]

$$r(\tau) = \int \tilde{r}(v)\exp[j2\pi\tau v]dv \qquad (2)$$

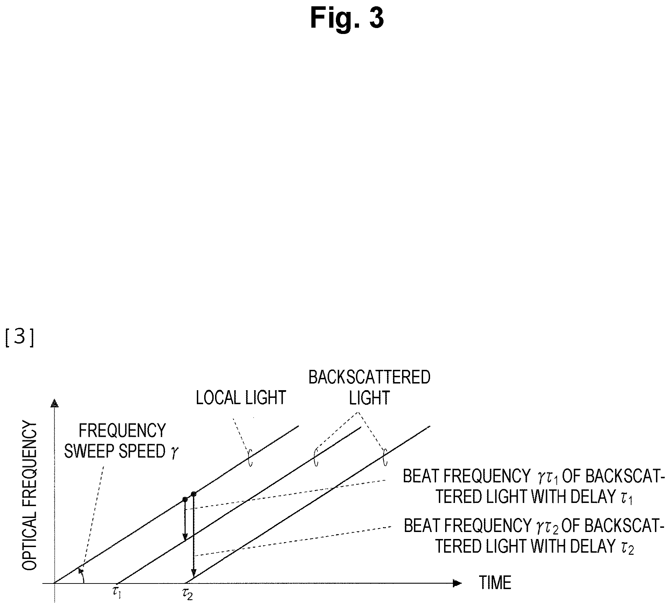

Further, the optical frequency response r̃(ν) is sampled in the optical frequency domain. For example, in a case where the sampling period is $1/\tau_{Aux.} = FSR$, the maximum measurable delay (Nyquist frequency) is $1/(2*FSR) = \tau_{Aux.}/2$. Therefore, the length of a reference interferometer 130 determines the length of the measurable absolute distance.
In the conventional system illustrated in Fig. 2, the delay amount of the local light is zero, and therefore, a beat frequency is assigned in accordance with the delay (absolute distance) of the backscattered light as illustrated in Fig. 3. Accordingly, in the configuration illustrated in Fig. 2, the 90-degree hybrid 21 is not necessary.

(Role of the Optical 90-Degree Hybrid 21)

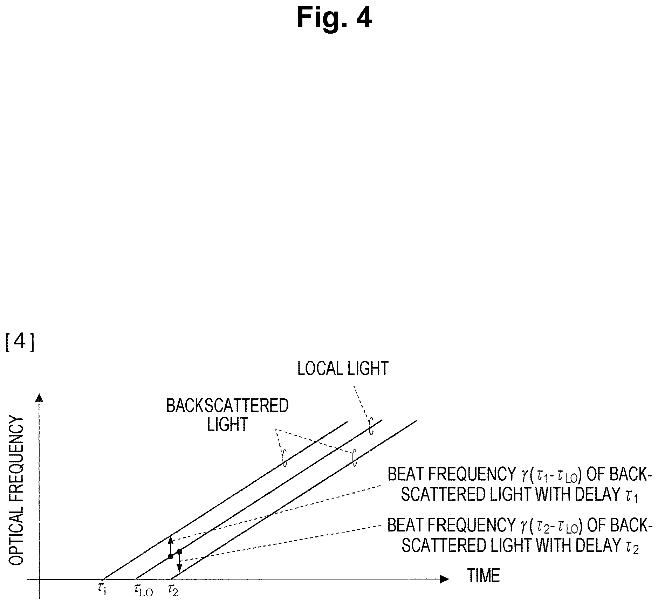

In the present disclosure, distance offsets are given to distances measured by the delay fiber 40 for the local light, and a measured distance is selected. At that time, light interferes with the backscattered light on the front side and the rear side of the delay amount of the local light, as illustrated in Fig. 4. Although beat frequencies are assigned in accordance with relative distances, two points having the same relative distance (two points on the front side and the rear side, with the delay amount of the local light being the point of symmetry) have the same beat frequency quantity. Reflected light having a distance shorter than the delay $\tau_D$ of the local light has a negative beat frequency, and reflected light having a longer distance has a positive beat frequency. Therefore, in the present disclosure, the optical 90-degree hybrid 21 and the BPDs 22 detect the in-phase component and the orthogonal component of the beat signal, respectively. This makes it possible to determine whether the beat frequency is positive or negative, and determine whether the beat frequency is shorter or longer than the delay $\tau_D$ of the local light.
An optical frequency response in the present disclosure is expressed by the following expression.
[Mathematical Expression 3]

$$\tilde{r}(v) = \int r(\tau_R)\exp[-j2\pi v(t)\tau_R]d\tau_R$$
$$\tau_R = \frac{2}{c}(z - L_D/2) = \frac{2}{c}z_R$$
$$z_R = z - \frac{L_D}{2} \qquad (3)$$

Here, the parameters are as follows.

$r(\tau_R)$: reflection coefficient
$L_D$: the delay fiber length for local light
$\tau_R$: the relative delay based on the delay amount applied by the delay fiber for local light
$z_R$: the relative length with respect to the delay fiber length for local light

Therefore, in the present disclosure, the maximum relative delay $\tau_R$ from which the delay amount $\tau_{Aux.}$ can be measured is determined. The measurable delay range is expressed as $|\tau_R| < \tau_{Aux}/2$, and the optical frequency response in the range expressed by the expression shown below is measured with respect to the relative distance $z_R$.

[Mathematical formula 4]

$$|z - L_D/2| \leq c\tau_{Aux.}/4 \qquad\qquad (4)$$

In this manner, the delay $\tau_{AUX.}$ in the reference interferometer 30 determines the length of the measurable relative distance in the present disclosure.

(Role of the Local Light Delay Fiber 40)

In the present disclosure, not only the delay $\tau_{AUX}$ but also wavelength dispersion at the time of propagation through the fiber length corresponding to the delay $\tau_D$ is caused in the local light, and a replica of the backscattered light propagating through the delay $t_D$ is generated. By causing this replica to interfere with the backscattered light in the 90-degree hybrid 21, it is possible to selectively detect a beat signal with the backscattered light from the vicinity of the delay $\tau_D$ while compensating for the wavelength dispersion.

Also, in the present disclosure, the delay $\tau_{AUX.}$ in the reference interferometer 30 determines the length of the measurable relative distance. For this reason, the reference interferometer 30 shorter than the laser coherence length can be used even in long-distance measurement in which the measurement target optical fiber 92 exceeds the laser coherence length. Accordingly, the quality of the clock signal does not deteriorate in the present disclosure.

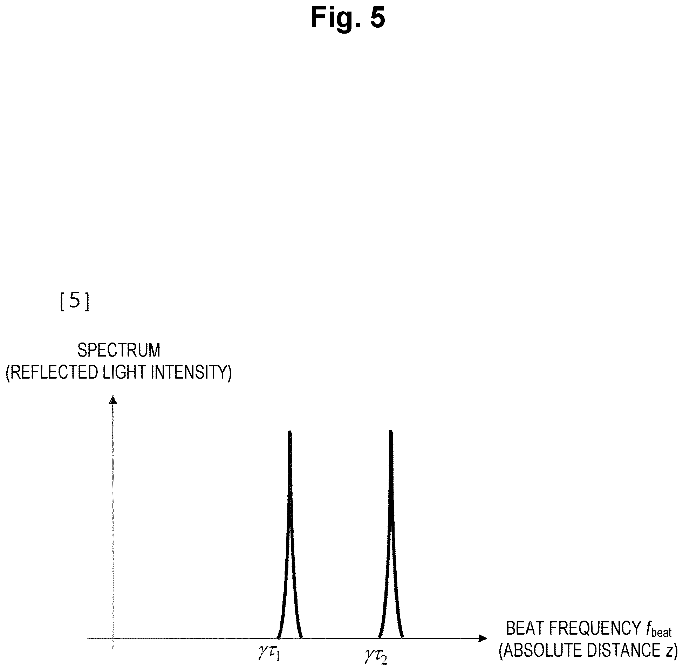

Fig. 5 illustrates an example of a spectrum to be measured with the configuration illustrated in Fig. 2. In the A/D 124, the beat frequency $f_{beat}$ corresponding to the absolute distance z is observed.

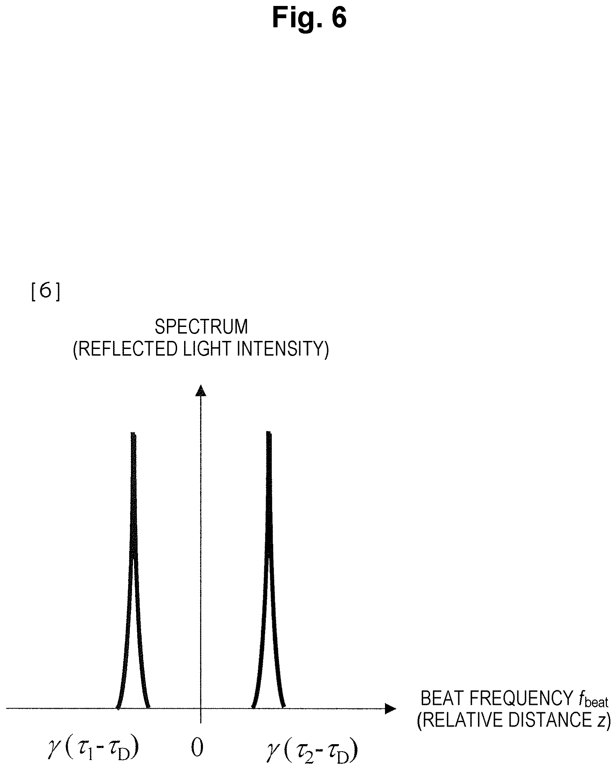

Fig. 6 illustrates an example of a spectrum to be measured with the configuration of the present disclosure. In the present disclosure, the beat frequency $f_{beat}$ corresponding to the relative distance z based on the delay $\tau_D$ in the local light delay fiber 40 is observed.

(Execution of Long-Distance Ultra-High Spatial Resolution Measurement)

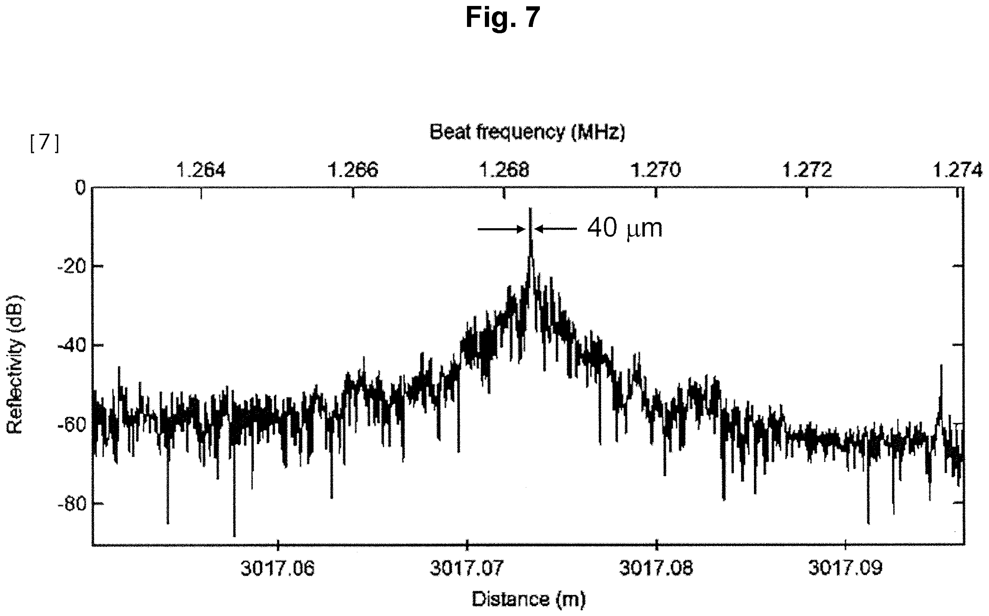

Fig. 7 illustrates an example of results of Fresnel reflection measurement at a point of 3 km. It can be seen that reflection of 40 $\mu$m can be detected. As described above, according to the present disclosure, it is possible to measure a long distance exceeding km with a spatial resolution of 100 $\mu$m or lower. Thus, soundness of an optical device installed at a long distance can be diagnosed.

(Points of the Present Disclosure)

-    Backscattered light at a relative distance with respect to the local light delay fiber can be measured.
-    The delay fiber serves to set the reference distance and wavelength dispersion compensation in relative distance measurement.
-    By making the local light delay fiber longer, it is possible to measure long-distance backscattered light.

Note that a signal processing device (not shown) included in the optical frequency domain reflectivity measuring apparatus of the present disclosure can also be formed with a computer and a program, and the program can be recorded on a recording medium or be provided through a network.

Industrial Applicability

The present disclosure can be applied in information and communication industries.

Reference Signs List

11 TLS
12, 14, 31, 34 coupler
13 circulator
21 90-degree hybrid
22, 35, 122 BPD
23, 123 LPF
24, 124 A/D
30, 130 auxiliary interferometer
32, 33 transmission path
91 optical frequency domain reflectivity measuring apparatus
92 measurement target optical fiber

**Claims**

1. An optical frequency domain reflectivity measuring apparatus (91) comprising:

   a local light delay fiber (40) that delays local light by a delay, $\tau_D$;
   an optical 90-degree hybrid (21) that receives an input of the local light delayed by $\tau_D$ by the local light delay fiber (40) and backscattered light from a measurement target (92), causes the local light and the backscattered light to interfere with each other, and generates an in-phase component and an orthogonal component of a beat signal generated by the interference; and
   a balance photodetector (22) that detects the in-phase component and the orthogonal component of the beat signal,
   wherein
   an optical frequency response of the measurement target (92) is measured with respect to a relative distance based on $\tau_D$ in the local light delay fiber (40), wherein $\tau_D$ gives a distance offset to distances measured by the local light delay fiber (40);
   **characterized in that** the optical frequency domain reflectivity measuring apparatus (91) further comprises:
   an auxiliary interferometer (30) that receives an input of the local light delayed by $\tau_D$ by the local light delay fiber (40), delays the input by a further delay, $\tau_{AUX}$, and provides a sampling clock having a sampling period of $1/\tau_{Aux}$ for sampling the frequency response of the measurement target (92) at equal optical frequency intervals.

2. The optical frequency domain reflectivity measuring apparatus (91) according to claim **1,** wherein a beat frequency is determined to be positive or negative, on a basis of the in-phase component and the orthogonal component of the beat signal.

3. An optical frequency domain reflectivity measuring method implemented by an optical frequency domain reflectivity measuring apparatus (91), the optical frequency domain reflectivity measuring apparatus (91)including:

   a local light delay fiber (40) that delays local light by a delay $\tau_D$,
   an optical 90-degree hybrid (21) that receives an input of the local light delayed by $\tau_D$ by the local light delay fiber (40) and backscattered light from a measurement target (92), and outputs each of an in-phase component and an orthogonal component of a beat signal generated by interference between the local light and the backscattered light,
   a balance photodetector (22) that detects the in-phase component and the orthogonal component of the beat signal, and
   an auxiliary interferometer (30) that receives an input of the local light delayed by $\tau_D$ by the local light delay fiber (40) and delays the input by a further delay, $\tau_{AUX}$;
   the optical frequency domain reflectivity measuring method comprising
   measuring an optical frequency response of the measurement target (92) with respect to a relative distance based on $\tau_D$ in the local light delay fiber (40), wherein $\tau_D$ gives a distance offset to distances measured by the local light delay fiber (40),
   wherein the frequency response of the measurement target (92) is sampled at equal optical frequency intervals via a sampling clock having a sampling period of $1/\tau_{Aux}$ provided by the auxiliary interferometer (30).

**Patentansprüche**

1. Optische Frequenzbereich-Reflexionsmessvorrichtung (91), aufweisend:

   eine Lokallichtverzögerungsfaser (40), die lokales Licht um eine Verzögerung $\tau_D$ verzögert;
   einen optischen 90-Grad-Hybrid (21), der ein durch die Lokallichtverzögerungsfaser (40) um $\tau_D$ verzögertes lokales Licht und von einem Messobjekt (92) zurückgestreutes Licht als Eingang empfängt, veranlasst, dass das lokale Licht und das zurückgestreute Licht miteinander interferieren, und eine gleichphasige Komponente und eine orthogonale Komponente eines durch die Interferenz erzeugten Schwebungssignals erzeugt; und
   einen symmetrischen Photodetektor (22), der die gleichphasige Komponente und die orthogonale Komponente des Schwebungssignals detektiert,
   wobei
   eine optische Frequenzantwort des Messobjekts (92) bezüglich eines relativen Abstands basierend auf $\tau_D$ in der Lokallichtverzögerungsfaser (40) gemessen wird, wobei $\tau_D$ einen Abstandsoffset zu den von der Lokallichtverzögerungsfaser (40) gemessenen Abständen angibt;
   **dadurch gekennzeichnet, dass** die optische Frequenzbereich-Reflexionsmessvorrichtung (91) ferner aufweist:
   ein Hilfsinterferometer (30), das ein durch die Lokallichtverzögerungsfaser (40) um $\tau_D$ verzögertes lokales Licht als Eingang empfängt, den Eingang um eine weitere Verzögerung $\tau_{AUX}$ verzögert und einen Abtasttakt mit einer Abtastperiode von $1/\tau_{Aux}$ zum Abtasten der Frequenzantwort des Messobjekts (92) in gleichen optischen Frequenzintervallen bereitstellt.

2. Optische Frequenzbereich-Reflexionsmessvorrichtung (91) nach Anspruch 1, wobei
   eine Schwebungsfrequenz, basierend auf der gleichphasigen Komponente und der orthogonalen Komponente des Schwebungssignals, als positiv oder negativ bestimmt wird.

3. Optische Frequenzbereich-Reflexionsmessverfahren, das durch eine optische Frequenzbereich-Reflexionsmessvorrichtung (91) implementiert wird, wobei die optische Frequenzbereich-Reflexionsmessvorrichtung (91) aufweist:

   eine Lokallichtverzögerungsfaser (40), die lokales Licht um eine Verzögerung $\tau_D$ verzögert;
   einen optischen 90-Grad-Hybrid (21), der ein durch die Lokallichtverzögerungsfaser (40) um $\tau_D$ verzögertes lokales Licht und von einem Messobjekt (92) zurückgestreutes Licht als Eingang empfängt und jeweils eine gleichphasige Komponente und eine orthogonale Komponente eines durch Interferenz zwischen dem lokalen Licht und dem zurückgestreuten Licht erzeugten Schwebungssignals ausgibt;
   einen symmetrischen Photodetektor (22), der die gleichphasige Komponente und die orthogonale Komponente des Schwebungssignals detektiert, und
   ein Hilfsinterferometer (30), das ein durch die Lokallichtverzögerungsfaser (40) um $\tau_D$ verzögertes lokales Licht als Eingang empfängt und den Eingang um eine weitere Verzögerung $\tau_{AUX}$ verzögert;
   wobei das optische Frequenzbereich-Reflexionsmessverfahren aufweist:

   Messen einer optischen Frequenzantwort des Messobjekts (92) bezüglich eines relativen Abstands basierend auf $\tau_D$ in der Lokallichtverzögerungsfaser (40), wobei $\tau_D$ einen Abstandsoffset zu den von der Lokallichtverzögerungsfaser (40) gemessenen Abständen angibt;
   wobei die Frequenzantwort des Messobjekts (92) mittels eines von dem Hilfsinterferometer (30) bereitgestellten Abtasttakts mit einer Abtastperiode von $1/\tau_{Aux}$ in gleichen optischen Frequenzintervallen abgetastet wird.

**Revendications**

1. Appareil de mesure de réflectivité dans le domaine optique (91) comprenant :

   une fibre de retard de lumière locale (40) qui retarde la lumière locale d'un retard $\tau_D$ ;
   un hybride optique à 90 degrés (21) qui reçoit une entrée de la lumière locale retardée de $\tau_D$ par la fibre de retard de lumière locale (40) et la lumière rétrodiffusée provenant d'une cible de mesure (92), et qui provoque l'interférence entre la lumière locale et la lumière rétrodiffusée, et génère une composante en phase et une composante orthogonale d'un signal de battement généré par l'interférence ; et
   un photodétecteur équilibré (22) qui détecte la composante en phase et la composante orthogonale du signal de battement,

où

une réponse en fréquence optique de la cible de mesure (92) est mesurée par rapport à une distance relative basée sur $\tau_D$ dans la fibre de retard de lumière locale (40), où $\tau_D$ donne un décalage de distance aux distances mesurées par la fibre de retard de lumière locale (40) ; **caractérisé en ce que** l'appareil de mesure de réflectivité dans le domaine fréquentiel optique (91) comprend en outre :

un interféromètre auxiliaire (30) qui reçoit une entrée de la lumière locale retardée de $\tau_D$ par la fibre de retard de lumière locale (40), retarde l'entrée d'un retard supplémentaire, $\tau_{AUX}$, et fournit une horloge d'échantillonnage ayant une période d'échantillonnage de $1/\tau_{AUX}$ pour échantillonner la réponse en fréquence de la cible de mesure (92) à des intervalles de fréquence optique égaux.

2. Appareil de mesure de réflectivité dans le domaine optique (91) selon la revendication 1, dans lequel une fréquence de battement est déterminée comme étant positive ou négative, sur la base de la composante en phase et de la composante orthogonale du signal de battement.

3. Procédé de mesure de réflectivité dans le domaine fréquentiel optique mis en œuvre par un appareil de mesure de réflectivité dans le domaine fréquentiel optique (91), l'appareil de mesure de réflectivité dans le domaine fréquentiel optique (91) comprenant :

une fibre de retard de lumière locale (40) qui retarde la lumière locale d'un retard $\tau_D$,

un hybride optique à 90 degrés (21) qui reçoit une entrée de la lumière locale retardée de $\tau_D$ par la fibre de retard de lumière locale (40) et la lumière rétrodiffusée provenant d'une cible de mesure (92), et qui délivre en sortie chacune d'une composante en phase et d'une composante orthogonale d'un signal de battement généré par l'interférence entre la lumière locale et la lumière rétrodiffusée,

un photodétecteur équilibré (22) qui détecte la composante en phase et la composante orthogonale du signal de battement, et

un interféromètre auxiliaire (30) qui reçoit une entrée de la lumière locale retardée de $\tau_D$ par la fibre de retard de lumière locale (40), et qui retarde l'entrée d'un retard supplémentaire, $\tau_{AUX}$ ;

le procédé de mesure de réflectivité dans le domaine fréquentiel optique comprenant

la mesure d'une réponse en fréquence optique de la cible de mesure (92) par rapport à une distance relative basée sur $\tau_D$ dans la fibre de retard de lumière locale (40),

où $\tau_D$ donne un décalage de distance aux distances mesurées par la fibre de retard de lumière locale (40), où la réponse en fréquence de la cible de mesure (92) est échantillonnée à intervalles de fréquence optique égaux par l'intermédiaire d'une horloge d'échantillonnage ayant une période d'échantillonnage de $1/\tau_{AUX}$ fournie par l'interféromètre auxiliaire (30).

# Fig. 1

[1] OPTICAL FREQUENCY DOMAIN REFLECTIVITY MEASURING APPARATUS

91
92

11
TLS

12
PROBE LIGHT

13

LOCAL LIGHT

Local delay fiber
(Delay $\tau_D$)   40

14

BACKSCATTERED
LIGHT

30
AUXILIARY INTER-
FEROMETER

21
90-Hyb.

31
33
32

Delay
$\tau_{Aux.}$

22   BPD      BPD   22

23   LPF      LPF   23

34

Sampling
clock

35   BPD

24   A/D

EP 4 215 894 B1

[2]

**Fig. 2**

# Fig. 3

[3]

FREQUENCY
SWEEP SPEED $\gamma$

LOCAL LIGHT

BACKSCATTERED
LIGHT

OPTICAL FREQUENCY

BEAT FREQUENCY $\gamma\tau_1$ OF BACKSCAT-
TERED LIGHT WITH DELAY $\tau_1$

BEAT FREQUENCY $\gamma\tau_2$ OF BACKSCAT-
TERED LIGHT WITH DELAY $\tau_2$

$\tau_1$ $\tau_2$

TIME

# Fig. 4

[4]

BACKSCATTERED LIGHT

LOCAL LIGHT

BEAT FREQUENCY $\gamma(\tau_1 - \tau_{LO})$ OF BACK-SCATTERED LIGHT WITH DELAY $\tau_1$

BEAT FREQUENCY $\gamma(\tau_2 - \tau_{LO})$ OF BACK-SCATTERED LIGHT WITH DELAY $\tau_2$

OPTICAL FREQUENCY

TIME

$\tau_1$   $\tau_{LO}$   $\tau_2$

# Fig. 5

[5]

SPECTRUM
(REFLECTED LIGHT INTENSITY)

$\gamma\tau_1$ $\gamma\tau_2$

BEAT FREQUENCY $f_{beat}$
(ABSOLUTE DISTANCE $z$)

# Fig. 6

[6]

SPECTRUM
(REFLECTED LIGHT INTENSITY)

BEAT FREQUENCY $f_{beat}$
(RELATIVE DISTANCE $z$)

$\gamma(\tau_1 - \tau_D)$      0      $\gamma(\tau_2 - \tau_D)$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020166331 A1

**Non-patent literature cited in the description**

- **U. GLOMBITZA** ; **E. BRINKMEYER**. Cohenret frequency-domain reflectometry for characterization of single-mode integrated-optical waveguides. *IEEE JLT*, August 1993, vol. 11 (8), 1377-1384

- **B. J. SOLLER et al.** High resolution optical frequency domain reflectometry for characterization of components and assemblies. *Opt. Exp.*, January 2005, vol. 13 (2), 666-674